# EUROPEAN PATENT SPECIFICATION

(11) **EP 2 464 591 B1**
(45) Date of publication and mention of the grant of the patent: **12.11.2014**
(21) Application number: 10833664.5
(22) Date of filing: 22.11.2010
(51) Int. Cl.: B66C 23/70

(54) **SLIDING ELEMENT AND TELESCOPIC DEVICE COMPRISING SUCH A SLIDING ELEMENT**
SCHIEBEELEMENT UND TELESKOPVORRICHTUNG MIT EINEM SOLCHEN SCHIEBEELEMENT
ÉLÉMENT COULISSANT ET DISPOSITIF TÉLESCOPIQUE COMPORTANT UN TEL ÉLÉMENT COULISSANT

(30) Priority: 30.11.2009 SE 0950916
(43) Date of publication of application: 20.06.2012
(73) Proprietor: Cargotec Patenter AB, 341-81 Ljungby (SE)
(72) Inventor: Nilsson, Johan, SE-824 42 Hudiksvall (SE)
(74) Representative: Löfgren, Jonas
(86) International application number: PCT/SE2010/051283
(87) International publication number: WO 2011/065899

(56) References cited:
- EP-A1- 1 319 629
- CN-Y- 2 356 210
- CN-Y- 201 358 141
- DE-A1-102006 023 963
- DE-A1-102006 023 963
- DE-U1- 29 804 237
- GB-A- 2 125 004
- JP-U- S5 221 684
- JP-U- 58 072 252
- JP-U- 60 133 892
- US-A- 3 796 016
- US-A- 3 837 502

## Description

### FIELD OF THE INVENTION AND PRIOR ART

The present invention relates to a telescopic device, particularly in the form of a telescopic crane boom or a telescopic support leg, according to the preamble of claim 1.

Extendable and retractable telescopic devices with two or more mutually displaceable telescopic parts are common in different types of apparatuses and machines and may for instance have the form of crane booms, support legs, rods, pillars etc. Hydraulic cranes are for instance often provided with one or more telescopic devices in the form of telescopic crane booms where the respective crane boom comprises two or more mutually displaceable telescopic parts in the form of telescopically displaceable crane boom parts. When the mutually displaceable telescopic parts are heavy and/or made of a material with comparatively high coefficient of friction, sliding elements of a material with lower coefficient of friction are often arranged between the telescopic parts in order to facilitate a mutual sliding movement between the telescopic parts and in order to protect the telescopic parts from wearing. Such a sliding element has to be attached in a suitable manner to one of the telescopic parts so that the sliding element is retained at the desired place between the telescopic parts.

A telescopic crane boom with a sliding element according to the preamble of claim 1 is previously known from US 7 204 379 B2. This known sliding element is on its upper side provided with lubricant grooves intended to accommodate lubricant in order to further reduce the friction between the sliding element and the crane boom part that is in sliding contact with the sliding element. The lubricant grooves are intended to be refilled with new lubricant when the crane boom is subjected to maintenance.

DE 10 2006 023 963 A1 discloses a sliding element comprising a plate-shaped body where several through holes are provided in the body between a sliding surface on a first side of the body and an opposite second side of the body. Porous members soaked with lubricant are accommodated in said through holes. The through holes are connected to lubricant grooves provided on said second side of the body. The lubricant grooves are in their turn connected to a feeding channel and an inlet opening provided in the body. Lubricant may be delivered to the porous members through the inlet opening, the feeding channel and the lubricant grooves.

### OBJECT OF THE INVENTION

The object of the present invention is to provide a telescopic device with a sliding element with new and favourable design.

### SUMMARY OF THE INVENTION

According to the present invention, said object is achieved by means of a telescopic device having the features defined in claim 1.

The sliding element included in the telescopic device according to the invention comprises a plate-shaped body with:
- an underside, through which the sliding element is intended to rest against a support surface of a first telescopic part;
- an upper side, which constitutes a sliding surface and through which the sliding element is intended to be in sliding contact with a surface of a second telescopic part; and
- a lubricant groove provided in the upper side and connected to a feeding channel extending inside the sliding element, which feeding channel has an inlet opening arranged in an external edge surface of the sliding element in order to allow feeding of lubricant into this lubricant groove through the inlet opening and the feeding channel.

In this description and the subsequent claims, external edge surface of the sliding element refers to and outwardly facing lateral surface of the sliding element extending at an angle, for instance perpendicularly, to the upper side of the plate-shaped body of the sliding element.

By means of the feeding channel, lubricant can be fed into the lubricant groove also at occasions when the lubricant groove is not accessible from the upper side of the sliding element. Consequently, possibilities are hereby created for a refilling of lubricant into the lubricant groove when the sliding element is in place between two telescopic parts with one of the telescopic parts in contact with the upper side of the sliding element.

According to the invention, the telescopic device comprises a holding element and a pin fixed to and projecting from the holding element, which pin is insertable into the feeding channel of the sliding element through the inlet opening of the feeding channel. The holding element is designed to be attached to a flange of the first telescopic part with the pin received in the feeding channel of the sliding element, and the pin is hollow in order to allow feeding of lubricant into the feeding channel of the sliding element through the pin. Consequently, it will hereby be possible to feed lubricant into the feeding channel through the pin fixed to the holding element, whereby the feeding of lubricant into the feeding channel is facilitated.

An embodiment of the invention is characterized in:
- that a projection is arranged on the underside of the body of the sliding element, this projection extending to the edge surface that is provided with the inlet opening;
- that the feeding channel of the sliding element or at least a part of this feeding channel is arranged in said projection; and
- that said wall of the first telescopic part is provided with a recess, which is designed to receive said projection of the sliding element.

The projection creates a locally increased thickness of the sliding element in the part of the sliding element where the feeding channel is arranged.

According to another embodiment of the invention, the recess in said wall has a shape essentially corresponding to the shape of the projection of the sliding element to thereby limit the displaceability of the sliding element in a plane parallel to this wall when the projection is received in the recess. Hereby, the projection of the sliding element and the corresponding recess in the wall will contribute to keep the sliding element in place to the first telescopic part.

According to another embodiment of the invention, an inlet nozzle with a non-return valve is fixed to the holding element and connected to the pin in order to allow feeding of lubricant to the pin through this inlet nozzle. Owing to the non-return valve, lubricant is prevented from flowing back out of the feeding channel through the pin, and lubricant can in a simple manner be fed into the feeding channel by connecting a feeding device, through a hose or the like, to the inlet nozzle fixed to the holding element.

According to another embodiment of the invention, the pin fixed to the holding element is designed to keep the sliding element secured to the first telescopic part by engagement in the feeding channel. Hereby, the pin will perform the function of a feeding member for lubricant as well as a securing member for securing the sliding element to the first telescopic part.

According to another embodiment of the invention, the holding element is designed to abut, when attached to said flange, against an external edge surface of the sliding element to thereby limit the displaceability of the sliding element in a plane parallel to said wall. Hereby, the sliding element will contribute to keep the sliding element in place to the first telescopic part.

According to another embodiment of the invention, the holding element is designed to be attached to said flange by means of screw joint. Hereby, the holding element can easily be removed so as to thereby release the sliding element when it is necessary to exchange the sliding element for a new sliding element due to wearing down or other damage.

According to another embodiment of the invention, the telescopic device comprises a spacer plate, which by means of the holding element is attachable to said wall of the first telescopic part between the wall and the sliding element and which is provided with an opening designed to receive the projection of the sliding element. By arranging such a spacer plate of suitable thickness between the sliding element and the wall of the first telescopic part, the position of the upper side of the sliding element can be adjusted to fit to the prevailing play between the two telescopic parts.

Other favourable features of the telescopic device according to the present invention will appear from the dependent claims and the description following below.

### BRIEF DESCRIPTION OF THE DRAWINGS

The invention will in the following be more closely described by means of embodiment examples, with reference to the appended drawings. It is shown in:
- Fig 1: a perspective view from above of a sliding element according to an embodiment of the present invention,
- Fig 2: a perspective view from below of the sliding element according to Fig 1,
- Fig 3: a longitudinal section across the sliding element according to Fig 1,
- Fig 4: a schematic perspective view of an end section of a telescopic crane boom part provided with two sliding elements of the type illustrated in Figs 1-3,
- Fig 5: a schematic perspective view of the telescopic crane boom part according to Fig 4, shown without sliding elements,
- Fig 6: a schematic perspective view of a holding element for a sliding element of the type illustrated in Figs 1-3,
- Fig 7: a schematic perspective view of a spacer plate for a sliding element of the type illustrated in Figs 1-3, and
- Fig 8: a longitudinal section across two telescopic crane boom parts and a sliding element of the type illustrated in Figs 1-3 arranged between these crane boom parts.

### DETAILED DESCRIPTION OF PREFERRED EMBODIMENTS

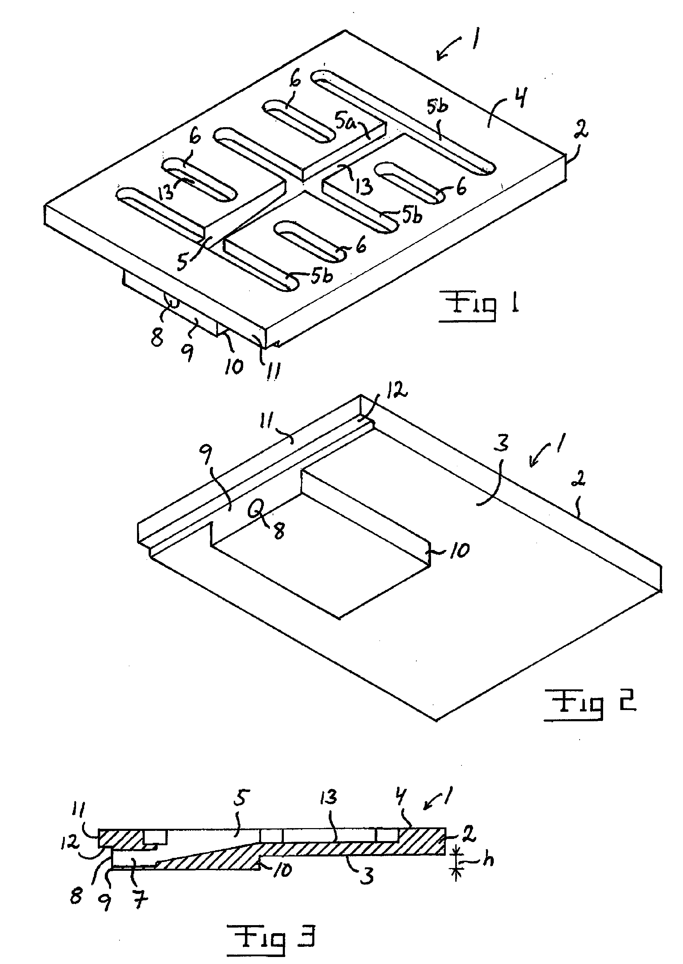

A sliding element 1 according to an embodiment of the present invention is illustrated in Figs 1-3. This sliding element 1 is intended to be arranged between two mutually displaceable telescopic parts of a telescopic device and comprises a plate-shaped body 2, which is made of a material with low coefficient of friction, such as for instance a suitable plastic material or a suitable metallic or ceramic material. Suitable materials may for instance be Robalon-Z, POLYform (POM), brass, ceramics or the similar. The body 2 may be rectangular as seen in a planar view, as shown in Fig 1, or have any other suitable shape as seen in a planar view, for instance circular or elliptical.

The plate-shaped body 2 of the sliding element has an underside 3, through which the sliding element 1 is intended to rest against a support surface of a first telescopic part to which the sliding element is mounted, and an opposite upper side 4, which constitutes a sliding surface and through which the sliding element 1 is intended to be in sliding contact with the surface of a second telescopic part. A number of elongated lubricant grooves 5, 6 for receiving lubricant, for instance in the form of oil, are arranged in the upper side 4 of the body. These lubricant grooves 5, 6 are formed as depressions in the upper side 4. The respective lubricant groove 5, 6 is consequently open at the top and is provided with a bottom surface 13, which is lowered from the upper side 4 and which closes the lubricant groove at the bottom. The respective lubricant groove 5, 6 does not extend all the way to the edges of the body, and the lubricant can thereby be retained in the lubricant groove.

In the illustrated embodiment, the sliding element 1 is in its upper side 4 provided with four shorter lubricant grooves 6 and one longer lubricant groove 5. The longer lubricant groove 5 comprises a central section 5a extending rectilinearly along the longitudinal axis of the sliding element, and three transverse sections 5b extending perpendicularly to the central section 5a. The transverse sections 5b cross the central section 5a and are connected to the central section so that lubricant received in the central section 5a can flow from the central section further on to the transverse sections 5b.

The last-mentioned lubricant groove 5 is connected to a feeding channel 7 extending inside the sliding element 1, which feeding channel has an inlet opening 8 arranged in an external edge surface 9 of the sliding element. Through the inlet opening 8 and the feeding channel 7, lubricant can be fed into this lubricant groove 5. In the illustrated example, the inlet channel 7 runs into a deepened part of the central section 5a of the lubricant groove, as shown in Fig 3. The feeding channel 7 is formed by a hole that extends through a part of the sliding element. The feeding channel 7 suitably extends in parallel or at least essentially in parallel with the upper side 4 of the body.

In the illustrated embodiment, a projection 10 is arranged on the underside 3 of the body. This projection 10 projects downwards from the underside 3 of the body. The projection 10 extends to the edge surface 9 of the sliding element that is provided with the inlet opening 8, and the feeding channel 7 of the sliding element is arranged in this projection. The projection 10 has a width that is smaller than the width of the body 2 of the sliding element and a length that is smaller than the length of said body. In the illustrated example, the lateral edges of the projection extend perpendicularly to the underside 3 of the body, and the projection 10 has a rectangular cross-sectional shape in this case. In the illustrated example, the projection 10 also has a rectangular shape as seen in a planar view. The projection 10 and the plate-shaped body 2 are suitably made in one piece, for instance by injection moulding.

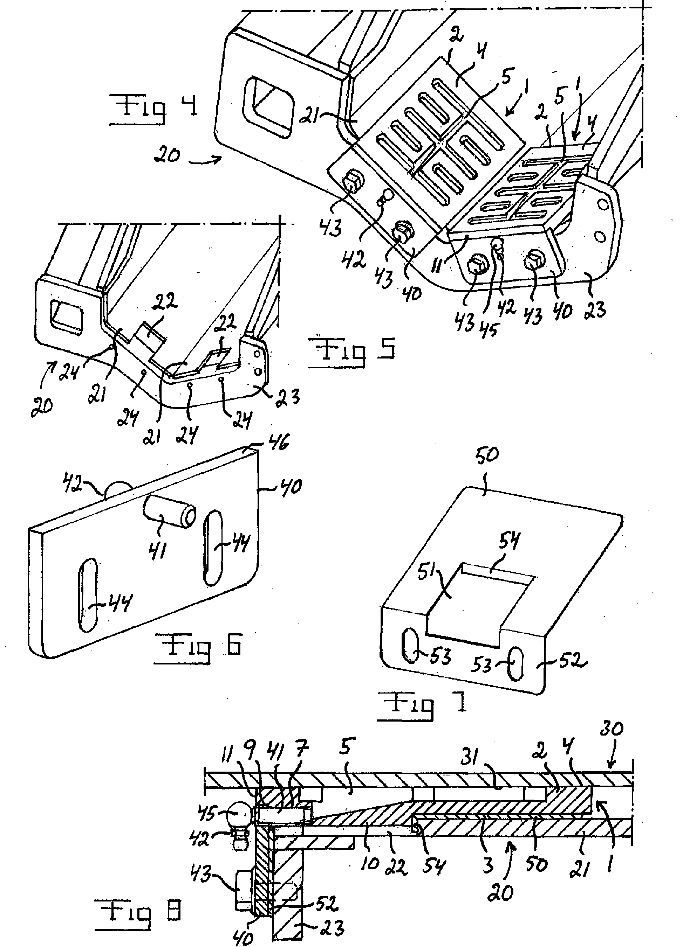

Fig 4 shows two sliding elements 1 of the type described above mounted to an end of a telescopic part 20, which in the following is denominated first telescopic part. The sliding elements 1 are attached to a wall 21 of the first telescopic part 20 and this first telescopic part is intended to be in sliding contact with a second telescopic part 30 (see Fig 8) through these sliding elements. The projection 10 of the respective sliding element 1 is designed for insertion into a recess 22 (see Fig 5), which is arranged in the wall 21 of the first telescopic part 20. The respective recess 22 is consequently designed to receive the projection 10 of a sliding element and has a shape essentially corresponding to the shape of the projection of the sliding element to thereby limit the displaceability of the sliding element in a plane parallel to the wall 21 when the projection 10 is received in the recess 22. Consequently, the projection 10 acts as a stop lug which contributes to keep the sliding element in place to the wall 21. In the illustrated example, the respective recess 22 has a rectangular shape corresponding to the rectangular shape of the projection 10 of the sliding element. When the projection 10 is inserted into the associated recess 22, the body 2 rests, through the surface of the underside 3 surrounding the projection 10, against the surface of the wall 21 that surrounds the recess 22, whereas lateral edges of the projection abut against the edges of the recess. The sliding element 1 may either rest directly against the wall 21 or rest against the wall through a spacer plate 50, as will be more closely described below with reference to Figs 7 and 8.

A holding element 40 is attached to a flange 23, which is arranged at the end of the first telescopic part 20. A pin 41 is in its turn fixed to the holding element 40. This pin 41 is hollow and open at its ends so that a flow-through channel for lubricant is formed inside the pin. The pin 41 projects from the holding element 40 and is insertable into the feeding channel 7 of the sliding element through the inlet opening 8 of the feeding channel, as illustrated in Fig 8. An inlet nozzle 42 with a non-return valve 45 is also fixed to the holding element 40 and connected to the pin 41 in order to allow feeding of lubricant to the pin through the inlet nozzle. The inlet nozzle 42 may be screwed directly onto the pin 41 through an internal thread at the end of the pin that faces the holding element 40 and a corresponding external thread on the inlet nozzle. In the installed state, the pin 41 extends into the feeding channel 7 of the sliding element and by connecting a lubricant receptacle to the inlet nozzle 42, for instance through a hose or the similar, lubricant can be introduced into the lubricant groove 5 through the inlet nozzle 42, the pin 41 and the feeding channel 7. The pin 41 is suitably designed to keep the sliding element 1 secured to the first telescopic part 20 through engagement in the feeding channel 7, with the pin preventing a displacement of the sliding element away from the wall 21 in a direction perpendicular to the wall. The holding element 40 may with advantage have the shape of a plate and be attachable to said flange 23 by means of screw joint, as illustrated in Figs 4 and 8. In the illustrated example, the holding element 40 is attached to the flange 23 by means of two screws 43, which extend through a respective through recess 44 in the holding element and are screwed into a respective threaded hole 24 in the flange 23. These recesses 44 suitably have an elongated shape as seen in a direction perpendicular to the wall 21, as illustrated in Fig 6, so as to thereby make possible an adjustment of the position of the holding element in relation to the flange 23 in the last mentioned direction.

In the illustrated embodiment, the projection 10 has a height h (see Fig 3) from the underside 3 of the body that is smaller than or equal to the thickness of the wall 21. Furthermore, the recess 22 is open towards the end of the wall. In this case, the holding element 40 is designed to abut, when attached to said flange 23, against an external edge surface 9 of the sliding element 1 to thereby prevent the projection 10 from being displaced in a plane parallel to the wall 21 out of the recess 22. The last-mentioned edge surface 9 and the edge surface that is provided with the inlet opening 8 of the feeding channel are suitably one and the same edge surface of the sliding element. The edge surface 9 suitably extends perpendicularly to the upper side 4 and the underside 3 of the body 2 of the sliding element, as illustrated in Figs 1-3. The edge surface 9 is suitably retracted in relation to the adjacent external edge surface 11 of the body 2 of the sliding element so that a shoulder 12 is formed between these edge surfaces 9, 11. The upper edge 46 of the holding element is intended to abut against this shoulder 12 of the sliding element.

When the sliding element 1 is to be attached to the first telescopic part 20, the sliding element is applied with the underside 3 of the body 2 against the wall 21 of the telescopic part and with the projection 10 inserted into an associated recess 22 in the wall. Thereafter, the holding element 40 is moved towards the edge surface 9 of the sliding element so that the pin 41 that projects from the holding element is pushed into the feeding channel 7 of the sliding element through the inlet opening 8. The holding element 40 is then secured to the flange 23 by screwing, whereby the sliding element 1 is secured to the wall 21 under the effect of the holding element 40 and the pin 41. The holding element 40 and the edges of the recess 22 will prevent a displacement of the sliding element 1 in relation to the first telescopic part 20 in a plane parallel to the wall 21, at the same time as the pin 41 prevents a displacement of the sliding element 1 away from the wall 21 in a direction perpendicular to the wall.

When the sliding element has been installed, the upper side 4 of the body is intended to be in sliding contact with a surface 31 of a second telescopic part 30 so as to thereby form a sliding surface between this second telescopic part 30 and the first telescopic part 20. These two telescopic parts 20, 30 are arranged to be displaceable in relation to each other in a plane extending in parallel with the upper side 4 of the body and they may be arranged to rest against each other through the sliding element 1. In Fig 8, a sliding element 1 is shown mounted to a first telescopic part 20 in the above-described manner and with a second telescopic part 30 in sliding contact with the upper side 4 of the body 2 of the sliding element. As appears from this figure, lubricant can be introduced into the lubricant groove 5 through the inlet nozzle 42, the pin 41 and the feeding channel 7 while the second telescopic part 30 remains in contact with the upper side 4 of the body, i.e. without requiring any separation of the two telescopic parts 20, 30 from each other.

In the example illustrated in Fig 8, a spacer plate 50 is placed between the underside 3 of the body 2 of the sliding element and the wall 21. This spacer plate 50 is illustrated in Fig 7 and is provided with an opening 51 designed to receive the projection 10 of the sliding element. This opening 51 has a shape corresponding to the shape of the recess 22 in the wall 21 and is intended to be located above this recess 22 when the spacer plate 50 is in place between the sliding element 1 and the wall 21. At one end, in connection with the opening 51, the spacer plate 50 is provided with a downwardly projecting mounting flange 52, which is intended to be clamped between the holding element 40 and the flange 23 of the first telescopic part when the holding element is secured by screwing to the last-mentioned flange 23. Recesses 53 for receiving the screws 43 are arranged in the mounting flange 52. The recesses 53 of the mounting flange are intended to be aligned with the recesses 44 of the holding element 40 and suitably has the same shape as these. At the inner edge of the opening 51, the spacer plate is provided with a downward projecting support lug 54, which has the same thickness as the mounting flange 52 and is intended to abut against the inner edge of the recess 22 in the wall 21. The spacer plate 50 is with advantage made my punching and bending of a piece of plate. By providing spacer plates 50 of different thicknesses it will be possible to adapt a sliding element 1 of the type in question to the prevailing play between two telescopic parts by choosing a spacer plate of suitable thickness.

A sliding element 1 of the type in question is with advantage used in a telescopic device in the form of a telescopic crane boom or a telescopic support leg, in which case the sliding element is installed between two telescopic crane boom parts or between two telescopic support leg parts.

The invention is of course not in any way limited to the embodiments described above. On the contrary, several possibilities to modifications thereof should be apparent to a person skilled in the art without thereby deviating from the basic idea of the invention as defined in the appended claims.

## Claims

1. A telescopic device, particularly in the form of a telescopic crane boom or a telescopic support leg, comprising at least a first telescopic part (20) and a second telescopic part (30) which are mutually displaceable and a sliding element (1), which is intended to be arranged between said telescopic parts and through which the first telescopic part (20) is intended to be in sliding contact with the second telescopic part (30), wherein the sliding element (1) is attachable to a wall (21) of the first telescopic part (20) and comprises a plate-shaped body (2) with:
- an underside (3), through which the sliding element is intended to rest against a support surface of the first telescopic part (20);
- an upper side (4), which constitutes a sliding surface and through which the sliding element is intended to be in sliding contact with a surface of the second telescopic part (30); and
- one or more lubricant grooves (5, 6) provided in the upper side (4) for receiving lubricant,
**characterized in:**
- **that** at least one of said lubricant grooves (5) is connected to a feeding channel (7) extending inside the sliding element (1), which feeding channel has an inlet opening (8) arranged in an external edge surface (9) of the sliding element in order to allow feeding of lubricant into this lubricant groove (5) through the inlet opening (8) and the feeding channel (7);
- **that** the telescopic device comprises a holding element (40) and a pin (41) fixed to and projecting from the holding element, which pin is insertable into the feeding channel (7) of the sliding element through the inlet opening (8) of the feeding channel;
- **that** the holding element (40) is designed to be attached to a flange (23) of the first telescopic part (20) with the pin (41) received in the feeding channel (7) of the sliding element; and
- **that** the pin (41) is hollow in order to allow feeding of lubricant into the feeding channel (7) of the sliding element through the pin.

2. A telescopic device according to claim 1, **characterized in that** the feeding channel (7) extends inside the sliding element in parallel or at least essentially in parallel with the upper side (4) of the body.

3. A telescopic device according to claim 1 or 2, **characterized in:**
- **that** a projection (10) is arranged on the underside (3) of the body (2) of the sliding element, this projection (10) extending to the edge surface (9) that is provided with the inlet opening (8);
- **that** the feeding channel (7) of the sliding element or at least a part of this feeding channel is arranged in said projection (10); and
- **that** said wall (21) of the first telescopic part (20) is provided with a recess (22), which is designed to receive said projection (10) of the sliding element (1).

4. A telescopic device according to claim 3, **characterized in that** the recess (22) in said wall (21) has a shape essentially corresponding to the shape of the projection (10) of the sliding element to thereby limit the displaceability of the sliding element in a plane parallel to this wall (21) when the projection (10) is received in the recess (22).

5. A telescopic device according to claim 3 or 4, **characterized in that** the telescopic device comprises a spacer plate (50), which by means of the holding element (40) is attachable to said wall (21) of the first telescopic part (20) between the wall (21) and the sliding element (1) and which is provided with an opening (51) designed to receive the projection (10) of the sliding element.

6. A telescopic device according to any of claims 1-5, **characterized in that** an inlet nozzle (42) with a non-return valve (45) is fixed to the holding element (40) and connected to the pin (41) in order to allow feeding of lubricant to the pin through this inlet nozzle.

7. A telescopic device according to any of claims 1-6, **characterized in that** the pin (41) is designed to keep the sliding element (1) secured to the first telescopic part (20) by engagement in the feeding channel (7).

8. A telescopic device according to any of claims 1-7, **characterized in that** the holding element (40) is designed to abut, when attached to said flange (23), against an external edge surface (9) of the sliding element to thereby limit the displaceability of the sliding element in a plane parallel to said wall (21).

9. A telescopic device according to claim 8, **characterized in that** the holding element (40) is designed to abut, when attached to said flange (23), against the external edge surface (9) in which the inlet opening (8) of the feeding channel is arranged.

10. A telescopic device according to any of claims 1-9, **characterized in that** the holding element (40) is designed to be attached to said flange (23) by means of screw joint.

11. A telescopic device according to any of claims 1-10, **characterized in that** the holding element (40) has the shape of a plate.

## Patentansprüche

1. Teleskopvorrichtung, insbesondere in der Form eines Teleskopkranauslegers oder eines Teleskoptragbeins, umfassend zumindest ein erstes Teleskopteil (20) und ein zweites Teleskopteil (30), die gegeneinander verschiebbar sind, und ein Gleitelement (1), das zur Anordnung zwischen den Teleskopteilen vorgesehen ist und durch das das erste Teleskopteil (20) in Gleitkontakt mit dem zweiten Teleskopteil (30) stehen soll, wobei das Gleitelement (1) an einer Wand (21) des ersten Teleskopteils (20) anbringbar ist und einen plattenförmigen Körper (2) umfasst mit:
- einer Unterseite (3), durch die das Gleitelement gegen eine Tragfläche des ersten Teleskopteils (20) aufliegen soll;
- eine Oberseite (4), die eine Gleitfläche bildet und durch die das Gleitelement in Gleitkontakt mit einer Fläche des zweiten Teleskopteils (30) stehen soll; und
- eine oder mehrere Schmiernuten (5, 6), die in der Oberseite (4) zur Aufnahme von Schmiermittel vorgesehen sind,
**dadurch gekennzeichnet:**
- **dass** zumindest eine der Schmiernuten (5) mit einem Zufuhrkanal (7) verbunden ist, der sich innerhalb des Gleitelements (1) erstreckt, wobei der Zufuhrkanal eine Einlassöffnung (8) aufweist, die in einer äußeren Randfläche (9) des Gleitelements angeordnet ist, um eine Zufuhr von Schmiermittel in diese Schmiernut (5) hinein durch die Einlassöffnung (8) und den Zufuhrkanal (7) zuzulassen;
- **dass** die Teleskopvorrichtung ein Halteelement (40) und einen Zapfen (41) umfasst, der an dem Halteelement befestigt ist und von diesem vorsteht, wobei der Zapfen in den Zufuhrkanal (7) des Gleitelements hinein durch die Einlassöffnung (8) des Zufuhrkanals hindurch einsetzbar ist;
- **dass** das Halteelement (40) konstruiert ist, um an einem Flansch (23) des ersten Teleskopteils (20) angebracht zu werden, wobei der Zapfen (41) in dem Zufuhrkanal (7) des Gleitelements aufgenommen ist; und
- das der Zapfen (41) hohl ist, um eine Zufuhr von Schmiermittel in den Zufuhrkanal (7) des Gleitelements durch den Zapfen hindurch zuzulassen.

2. Teleskopvorrichtung nach Anspruch 1,
**dadurch gekennzeichnet, dass** sich der Zufuhrkanal (7) innerhalb des Gleitelements parallel oder zumindest im Wesentlichen parallel zu der Oberseite (4) des Körpers erstreckt.

3. Teleskopvorrichtung nach Anspruch 1 oder 2,
**dadurch gekennzeichnet:**
- **dass** ein Vorsprung (10) an der Unterseite (3) des Körpers (2) des Gleitelements angeordnet ist, wobei dieser Vorsprung (10) sich zu der mit der Einlassöffnung (8) versehenen Randfläche (9) erstreckt;
- **dass** der Zufuhrkanal (7) des Gleitelements oder zumindest ein Teil dieses Zufuhrkanals in dem Vorsprung (10) angeordnet ist; und
- **dass** die Wand (21) des ersten Teleskopteils (20) mit einer Ausnehmung (22) versehen ist, die konstruiert ist, um den Vorsprung (10) des Gleitelements (1) aufzunehmen.

4. Teleskopvorrichtung nach Anspruch 3,
**dadurch gekennzeichnet, dass** die Ausnehmung (22) in der Wand (21) eine Form aufweist, die im Wesentlichen der Form des Vorsprungs (10) des Gleitelements entspricht, um dadurch die Verschiebbarkeit des Gleitelements in einer Ebene parallel zu dieser Wand (21) zu begrenzen, wenn der Vorsprung (10) in der Ausnehmung (22) aufgenommen ist.

5. Teleskopvorrichtung nach Anspruch 3 oder 4,
**dadurch gekennzeichnet, dass** die Teleskopvorrichtung eine Abstandshalteplatte (50) umfasst, die mittels des Halteelements (40) an der Wand (21) des ersten Teleskopteils (20) zwischen der Wand (21) und dem Gleitelement (1) anbringbar ist, und die mit einer Öffnung (51) versehen ist, die konstruiert ist, um den Vorsprung (10) des Gleitelements aufzunehmen.

6. Teleskopvorrichtung nach einem der Ansprüche 1 bis 5,
**dadurch gekennzeichnet, dass** ein Einlassstutzen (42) mit einem Rückschlagventil (45) an dem Halteelement (40) befestigt und mit dem Zapfen (41) verbunden ist, um eine Zufuhr von Schmiermittel zu dem Zapfen durch diesen Einlassstutzen hindurch zuzulassen.

7. Teleskopvorrichtung nach einem der Ansprüche 1 bis 6,
**dadurch gekennzeichnet, dass** der Zapfen (41) konstruiert ist, um das Gleitelement (1) an dem ersten Teleskopteil (20) durch Eingriff in dem Zufuhrkanal (7) befestigt zu halten.

8. Teleskopvorrichtung nach einem der Ansprüche 1 bis 7,
**dadurch gekennzeichnet, dass** das Halteelement (40) konstruiert ist, um, wenn es an dem Flansch (23) angebracht ist, an einer äußeren Randfläche (9) des Gleitelements anzuschlagen und dadurch die Verschiebbarkeit des Gleitelements in einer Ebene parallel zu der Wand (21) zu begrenzen.

9. Teleskopvorrichtung nach Anspruch 8,
**dadurch gekennzeichnet, dass** das Haltelement (40) konstruiert ist, um, wenn es an dem Flansch (23) angebracht ist, an der äußeren Randfläche (9), in welcher die Einlassöffnung (8) des Zufuhrkanals angeordnet ist, anzuschlagen.

10. Teleskopvorrichtung nach einem der Ansprüche 1 bis 9,
**dadurch gekennzeichnet, dass** das Halteelement (40) konstruiert ist, um an dem Flansch (23) mittels einer Schraubverbindung angebracht zu werden.

11. Teleskopvorrichtung nach einem der Ansprüche 1 bis 10,
**dadurch gekennzeichnet, dass** das Halteelement (40) die Form einer Platte aufweist.

## Revendications

1. Dispositif télescopique, en particulier sous la forme d'une flèche de grue télescopique ou d'une jambe de support télescopique, comprenant au moins une première partie (20) télescopique et une deuxième partie (30) télescopique, qui sont déplaçables mutuellement, et un élément (1) coulissant, qui est destiné à être disposé entre ces parties télescopiques et par lequel la première partie (20) télescopique est destinée à être en contact coulissant avec la deuxième partie (30) télescopique, l'élément (1) coulissant pouvant être fixé à une paroi (21) de la première partie (20) télescopique et comprenant un corps (2) en forme de plaque, ayant :
- un côté (3) inférieur, par lequel l'élément coulissant est destiné à reposer sur une surface de support de la première partie (20) télescopique ;
- un côté (4) supérieur, qui constitue une surface de coulissement et par lequel l'élément coulissant est destiné à être en contact coulissant avec une surface de la deuxième partie (30) télescopique ; et
- une ou plusieurs rainures (5, 6) pour du lubrifiant ménagées dans le côté (4) supérieur pour recevoir du lubrifiant,
**caractérisé en :**
- **ce qu'**au moins l'une des rainures (5) pour du lubrifiant communique avec un canal (7) d'alimentation s'étendant à l'intérieur de l'élément (1) coulissant, ce canal d'alimentation ayant une ouverture (8) d'entrée ménagée dans une surface (9) de bord extérieur de l'élément coulissant afin de permettre d'alimenter en lubrifiant cette rainure (5) pour du lubrifiant par l'intermédiaire de l'ouverture (8) d'entrée et du canal (7) d'alimentation ;
- ce que le dispositif télescopique comprend un élément (40) de maintien et une broche (41) fixée à l'élément de maintien et en faisant saillie, broche qui peut être insérée dans le canal (7) d'alimentation de l'élément coulissant par l'ouverture (8) d'entrée du canal d'alimentation ;
- ce que l'élément (40) de maintien est conçu pour être fixé à un rebord (23) de la première partie (20) télescopique, alors que la broche (41) est reçue dans le canal (7) d'alimentation de l'élément coulissant ; et
- ce que la broche (41) est creuse afin de permettre d'alimenter en lubrifiant le canal (7) d'alimentation de l'élément coulissant par l'intermédiaire de la broche.

2. Dispositif télescopique suivant la revendication 1, **caractérisé en ce que** le canal (7) d'alimentation s'étend à l'intérieur de l'élément coulissant parallèlement ou au moins sensiblement parallèlement au côté (4) supérieur du corps.

3. Dispositif télescopique suivant la revendication 1 ou 2, **caractérisé en :**
- **ce qu'**une saillie (10) est ménagée sur le côté (3) inférieur du corps (2) de l'élément coulissant, cette saillie (10) s'étendant vers la surface (9) de bord, qui est munie de l'ouverture (8) d'entrée ;
- ce que le canal (7) d'alimentation de l'élément coulissant ou au moins une partie de ce canal d'alimentation est ménagé dans cette saillie (10 ; et
- ce que la paroi (21) de la première partie (20) télescopique est pourvue d'un chambrage (22), qui est conçu pour recevoir la saillie (10) de l'élément (1) coulissant.

4. Dispositif télescopique suivant la revendication 3, **caractérisé en ce que** le chambrage (22) dans la paroi (21) a une forme correspondant sensiblement à la forme de la saillie (10) de l'élément coulissant pour limiter ainsi la possibilité de se déplacer de l'élément coulissant dans un plan parallèle à cette paroi (21), lorsque la saillie (10) est reçue dans le chambrage (22).

5. Dispositif télescopique suivant la revendication 3 ou 4, **caractérisé en ce que** le dispositif télescopique comprend une plaque (50) formant entretoise, qui, au moyen de l'élément (40) de maintien, peut être fixée à la paroi (21) de la première partie (20) télescopique entre la paroi (21) et l'élément (1) coulissant et qui est pourvue d'une ouverture (51) conçue pour recevoir la saillie (10) de l'élément coulissant.

6. Dispositif télescopique suivant l'une quelconque des revendications 1 à 5, **caractérisé en ce qu'**une buse (42) d'entrée ayant un clapet antiretour (45) est fixée à l'élément (40) de maintien et communique avec la broche (41) afin de permettre d'alimenter la broche en lubrifiant par l'intermédiaire de cette buse d'entrée.

7. Dispositif télescopique suivant l'une quelconque des revendications 1 à 6, **caractérisé en ce que** la broche (41) est conçue pour maintenir l'élément (1) coulissant fixé à la première partie (20) télescopique par pénétration dans le canal (7) d'alimentation.

8. Dispositif télescopique suivant l'une quelconque des revendications 1 à 7, **caractérisé en ce que** l'élément (40) de maintien est conçu pour buter, lorsqu'il est fixé au rebord (23), sur une surface (9) de bord extérieur de l'élément coulissant en limitant ainsi la possibilité de se déplacer de l'élément coulissant dans un plan parallèle à la paroi (21).

9. Dispositif télescopique suivant la revendication 8, **caractérisé en ce que** l'élément (40) de maintien est conçu pour buter, lorsqu'il est fixé au rebord (23), sur une surface (9) de bord extérieur, dans laquelle l'ouverture (8) d'entrée du canal d'alimentation est ménagée.

10. Dispositif télescopique suivant l'une quelconque des revendications 1 à 9, **caractérisé en ce que** l'élément (40) de maintien est conçu pour être fixé au rebord (23) au moyen d'un assemblage à vis.

11. Dispositif télescopique suivant l'une quelconque des revendications 1 à 10, **caractérisé en ce que** l'élément (40) de maintien a la forme d'une plaque.
